Europäisches Patentamt

European Patent Office

Office européen des brevets

(19)

(11) EP 0 615 626 B1

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(21) Anmeldenummer: 93921846.7

(22) Anmeldetag: 23.09.1993

(51) Int Cl.$^6$: **G01T 1/178**, G01T 1/40

(86) Internationale Anmeldenummer:
**PCT/EP93/02589**

(87) Internationale Veröffentlichungsnummer:
**WO 94/08255 (14.04.1994 Gazette 1994/09)**

(54) **VERFAHREN ZUR UNTERDRÜCKUNG VON FREMDSTRAHLUNGSEINFLÜSSEN BEI RADIOAKTIVEN MESSVERFAHREN**

PROCESS FOR SUPPRESSING THE INFLUENCE OF EXTRANEOUS RADIATION ON RADIOACTIVE MEASUREMENT PROCESSES

PROCEDE DE SUPPRESSION DE L'INFLUENCE DE RAYONNEMENTS EXTERIEURS LORS DE MESURES RADIOMETRIQUES

(84) Benannte Vertragsstaaten:
**CH DE ES FR GB IT LI NL SE**

(30) Priorität: **02.10.1992 DE 4233278**

(43) Veröffentlichungstag der Anmeldung:
**21.09.1994 Patentblatt 1994/38**

(73) Patentinhaber: **ENDRESS + HAUSER GMBH + CO.**
**D-79689 Maulburg (DE)**

(72) Erfinder:
• **LEISINGER, Ulrich**
**D-79541 Lörrach (DE)**

• **NEUHAUS, Joachim**
**D-79540 Lörrach (DE)**

(74) Vertreter: **Leiser, Gottfried, Dipl.-Ing. et al**
**Prinz & Partner,**
**Manzingerweg 7**
**81241 München (DE)**

(56) Entgegenhaltungen:
**DE-A- 2 045 895**      **DE-C- 4 114 030**
**FR-A- 2 352 310**      **US-A- 2 758 217**
**US-A- 4 078 178**      **US-A- 4 611 117**

## Beschreibung

Die Erfindung betrifft ein Verfahren zur Unterdrükkung von Fremdstrahlungseinflüssen bei radioaktiven Meßverfahren.

Bei radioaktiven Meßverfahren mit Röntgen- oder Gammastrahlung, die beispielsweise zur Messung der Dichte, des Füllstands oder des Durchflusses oder auch zur Überwachung von Grenzständen angewendet werden, führt der Einfluß von Fremdstrahlung zu falschen Meßergebnissen. Mit Fremdstrahlung ist dabei nicht die Hintergrundstrahlung in Form von kosmischer oder terrestrischer Strahlung gemeint, sondern der Einfluß von sporadisch wirksamen Strahlungsquellen, wie sie beispielsweise bei der zerstörungsfreien Werkstoffprüfung (Gamma-Graphie, Rückstreuuntersuchungen) sowie bei der Röntgendiagnose usw. verwendet werden. Das Auftreten einer solchen Fremdstrahlung kann durch zusätzliche Strahlungsdetektoren erkannt werden, die nicht der Meßstrahlung ausgesetzt sind, oder auch durch die von ihr verursachten Änderungen des Meßergebnisses. Es ist bekannt, den Anfang und das Ende einer Fremdstrahlung zu erkennen und anzuzeigen, damit der Anwender des Meßverfahrens davon unterrichtet wird, daß das Meßergebnis durch eine Fremdstrahlung verfälscht wird. Während der Dauer der Fremdstrahlung kann jedoch kein gültiges Meßergebnis der radioaktiven Messung erhalten werden.

Aufgabe der Erfindung ist die Schaffung eines Verfahrens, mit dem Fremdstrahlungseinflüsse bei einem radioaktiven Meßverfahren derart unterdrückt werden können, daß die Messung auch während des Bestehens der Fremdstrahlung mit gültigen Meßergebnissen fortgesetzt werden kann.

Diese Aufgabe wird nach der Erfindung dadurch gelöst, daß die Differenz zwischen dem Meßergebnis vor dem Anfang der Fremdstrahlung und dem Meßergebnis nach dem Erreichen eines stabilen Zustands der Fremdstrahlung ermittelt wird und daß während des Bestehens der Fremdstrahlung das Meßergebnis um die ermittelte Differenz verringert wird.

Bei dem erfindungsgemäßen Verfahren wird während des Bestehens der Fremdstrahlung ein resultierendes Meßergebnis erhalten, aus dem der Einfluß der Fremdstrahlung eliminiert ist, der nach dem Erreichen des stabilen Zustands ermittelt worden ist. Da sich dieser Einfluß nach dem Erreichen des stabilen Zustands nicht mehr ändert, entspricht das resultierende Meßergebnis dem allein von der Meßstrahlung stammenden Anteil. Das resultierende Meßergebnis ist daher gleich dem Meßergebnis, das erhalten würde, wenn die Fremdstrahlung nicht vorhanden wäre.

Bei bestimmten Anwendungen von Fremdstrahlungsquellen kann es vorkommen, daß der stabile Zustand nicht sofort nach dem Anfang der Fremdstrahlung erreicht wird. Dies ist beispielsweise bei der Gamma-Graphie der Fall, wo während der Überführung der Strahlungsquelle aus dem Strahlenschutzbehälter in den Kollimator eine hohe Spitze der Ortsdosisleistung auftritt und der stabile Zustand erst erreicht wird, wenn sich die Strahlungsquelle im Kollimator befindet. Um die radioaktive Messung auch während solcher Übergangszustände fortsetzen zu können, ist es gemäß einer Weiterbildung der Erfindung vorgesehen, daß zwischen dem Anfang der Fremdstrahlung und dem Erreichen des stabilen Zustands ein theoretischer Meßwert berechnet wird.

Andere vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnungen. In den Zeichnungen zeigen:

Fig. 1 eine Anordnung zur radioaktiven Messung des Füllstands in einem Behälter und

Fig. 2 das Blockschema der in Fig. 1 enthaltenen Anordnung zur Unterdrückung von Fremdstrahlungseinflüssen.

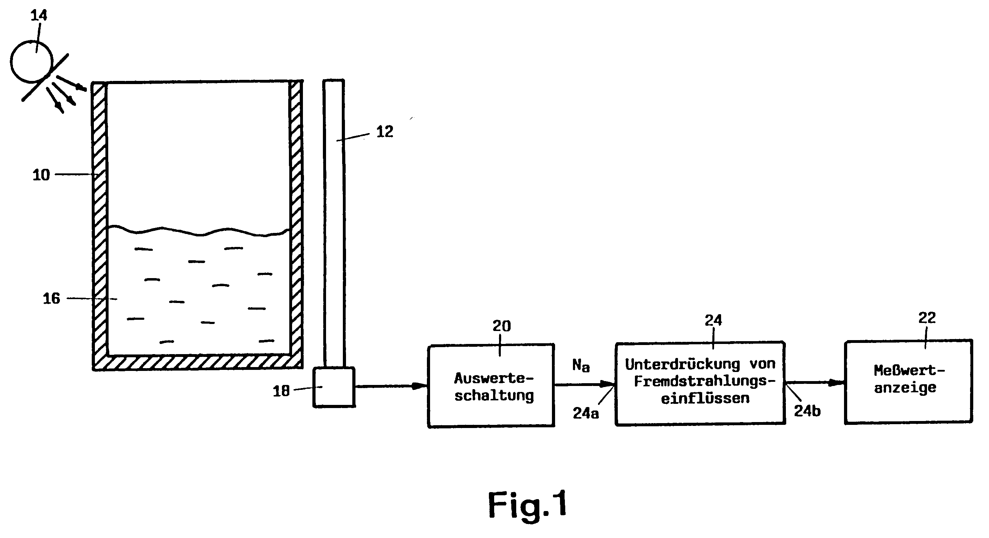

Fig. 1 zeigt als Anwendungsbeispiel für das erfindungsgemäße Verfahren die Messung des Füllstands in einem Behälter 10. Auf der einen Seite des Behälters 10 ist ein Plastik-Szintillator 12 angeordnet, der sich über die ganze Höhe des zu erfassenden Füllstands erstreckt. Auf der entgegengesetzten Seite des Behälters 10 ist eine Gammastrahlenquelle 14 angebracht, deren Strahlung durch den Behälter 10 und das darin befindliche Füllgut 16 hindurch auf den Plastik-Szintillator 12 gerichtet ist. Die Gammastrahlung wird vom Füllgut 16 stärker absorbiert als von der über dem Füllgut befindlichen Luft, so daß die Intensität der auf den Plastik-Szintillator 12 auftreffenden Gammastrahlung vom Füllstand im Behälter abhängig ist. Demzufolge ist auch die Anzahl und die Intensität der im Plastik-Szintillator 12 durch die Gammastrahlung erzeugten Lichtblitze vom Füllstand im Behälter 10 abhängig.

Zur Erfassung und Auswertung der im Plastik-Szintillator 12 erzeugten Lichtblitze ist am einen Ende des Platik-Szintillators ein photoelektrischer Wandler 18 angebracht, üblicherweise ein Photoelektronen-Vervielfacher, der jeden auftreffenden Lichtblitz in einen elektrischen Impuls umwandelt. Der Ausgang des Photoelektronen-Vervielfachers 18 ist mit einer elektronischen Auswerteschaltung 20 verbunden, in der jeweils in vorgegebenen Zeitintervallen die elektrischen Impulse gezählt werden, deren Amplitude eine vorgegebene Diskriminatorschwelle überschreitet. Die Auswerteschaltung 20 gibt am Ausgang die in jedem Zeitintervall gezählte Impulszahl $N_a$ ab, die unmittelbar ein Maß für den Füllstand im Behälter 10 ist und beispielsweise in einer Meßwertanzeige 22 angezeigt werden kann.

In Fig. 1 ist zwischen den Ausgang der Auswerteschaltung 20 und die Meßwertanzeige 22 eine Anordnung 24 zur Unterdrückung von Fremdstrahlungseinflüssen eingefügt. Mit Fremdstrahlung ist nicht die Hintergrundstrahlung in Form von kosmischer und terrestrischer Strahlung gemeint; diese Strahlung ist im wesentlichen konstant und kann bei der Anzeige des Meßergebnisses berücksichtigt werden. Die Anordnung 24 dient vielmehr zur Unterdrückung des Einflusses von sporadisch wirksamen Strahlenquellen, wie sie beispielsweise bei der zerstörungsfreien Werkstoffprüfung (Gamma-Graphie, Rückstreuuntersuchungen usw.) sowie bei der Röntgen-Diagnose usw. verwendet werden. Auch die Verwendung von hochenergetischer Teilchen-Strahlung wird als Fremdstrahlung detektiert. Wenn eine solche Fremdstrahlung auf den Plastik-Szintillator 12 fällt, verursacht sie zusätzliche Lichtblitze, die in der Auswerteschaltung 20 mitgezählt werden, so daß sich die Impulszahl $N_a$ ändert, obwohl der Füllstand gleich geblieben ist. Durch die Anzeige dieser geänderten Impulszahl würde das Meßergebnis verfälscht. Die Anordnung 24 ermöglicht es, trotz Vorhandenseins einer Fremdstrahlung weiterhin den richtigen Füllstand anzuzeigen.

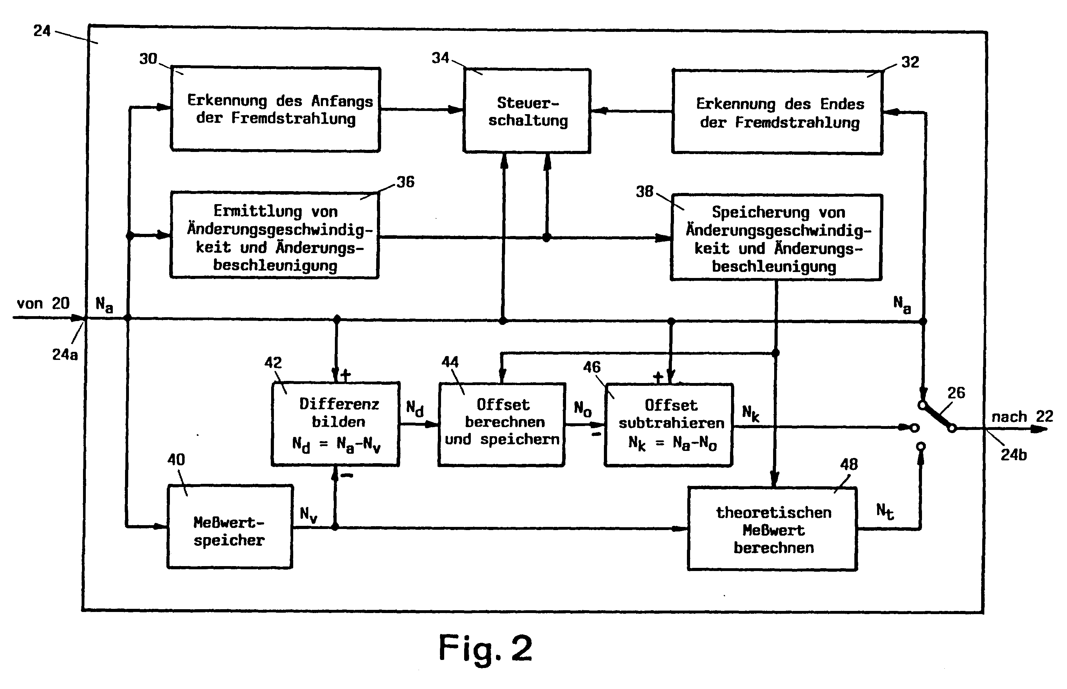

Die Funktionsweise der Anordnung 24 wird anhand des Blockschemas von Fig. 2 erläutert. Man erkennt in Fig. 2 den Eingang 24a der Anordnung 24, der vom Ausgang der Auswerteschaltung 20 jeweils die aktuelle Impulszahl $N_a$ empfängt, und den Ausgang 24b der Anordnung 24, der mit der Meßwertanzeige 22 verbunden ist. Zwischen den Eingang 24a und den Ausgang 24b ist ein Umschalter 26 eingefügt, der in der in Fig. 2 dargestellten Stellung den Eingang 24a direkt mit dem Ausgang 24b verbindet. In dieser Stellung des Umschalters 26 wird also die aktuelle Impulszahl $N_a$ unverändert zur Meßwertanzeige 22 übertragen. Dies entspricht dem Betrieb der Anordnung für den Fall, daß keine Fremdstrahlung vorhanden ist.

Um Fremdstrahlungseinflüsse zu unterdrücken, ist es notwendig, den Anfang und das Ende der Fremdstrahlung zu erkennen. Die Anordnung 24 enthält daher einen Funktionsblock 30 zur Erkennung des Anfangs der Fremdstrahlung und einen Funktionsblock 32 zur Erkennung des Endes der Fremdstrahlung. Die Ausgänge dieser Funktionsblöcke sind mit einer Steuerschaltung 34 verbunden, die alle Funktionen der Anordnung 24 steuert, wenn das Vorhandensein einer Fremdstrahlung erkannt worden ist.

In Fig. 2 empfangen die Funktionsblöcke 30 und 32 die aktuelle Impulszahl $N_a$ vom Eingang 24a; sie sind so ausgebildet, daß sie den Anfang bzw. das Ende der Fremstrahlung aus Änderungen der Impuszahl $N_a$ erkennen. Für das Erkennen einer Fremdstrahlung können bestimmte Erscheinungen ausgenutzt werden, die bei der Verwendung von Fremdstrahlungsquellen auftreten. Bei der zerstörungsfreien Werkstoffprüfung durch Gamma-Graphie verursacht beispielsweise sowohl die Überführung der Strahlungsquelle aus dem Strahlenschutzbehälter in den Kollimator als auch die Überführung der Strahlungsquelle aus dem Kollimator in den Strahlenschutzbehälter jeweils eine kurze Spitze sehr hoher Ortsdosisleistung, während zwischen diesen beiden Vorgängen die Ortsdosisleistung zwar niedriger als diese Spitzenwerte, aber doch höher als die von der Meßstrahlungsquelle 14 allein stammende Ortsdosisleistung ist.

Anfang und Ende der Fremdstrahlung können daher in den Funktionsblöcken 30 und 32 beispielsweise nach einem der folgenden Kriterien aus der aktuellen Impulszahl $N_a$ erkannt werden:

- durch die Detektierung einer Ortsdosisleistung, die über der maximal möglichen Ortsdosisleistung der Meßstrahlungsquelle 14 liegt;

- durch die Erkennung einer schnellen Änderung der Ortsdosisleistung, die nicht prozeßbezogen sein kann;

- aufgrund der Erkennung einer Übersteuerung des Strahlungsdetektors.

Anstatt den Anfang und das Ende der Fremdstrahlung aufgrund von Änderungen des Meßergebnisses, also der aktuellen Impulszahl $N_a$ pro Zeitintervall zu erkennen, ist es auch möglich, für diesen Zweck einen weiteren Strahlungsdetektor vorzusehen, der nicht der Nutzstrahlung der Strahlungsquelle 14 ausgesetzt ist. Wenn bei der Anordnung 24 von dieser Möglichkeit Gebrauch gemacht werden soll, werden einfach die Eingänge der Funktionsblöcke 30 und 32 anstatt mit dem Eingang 24a mit dem weiteren Strahlungsdetektor verbunden. Die Funktion der Anordnung bleibt unverändert.

Ein Funktionsblock 36 ermittelt aus den nacheinander eintreffenden aktuellen Impulszahlen $N_a$ die Änderungsgeschwindigkeit und die Änderungsbeschleunigung des Meßergebnisses. Die ermittelten Werte werden in einem Funktionsblock 38 gespeichert und auch der Steuerschaltung 34 zugeführt, die außerdem auch die aktuelle Impulszahl $N_a$ empfängt.

Jede aktuelle Impulszahl $N_a$ wird ferner einem Meßwertspeicher 40 zugeführt, in dem sie gespeichert wird. Am Ausgang des Meßwertspeichers steht jeweils die im vorhergehenden Zeitintervall ermittelte und gespeicherte Impulszahl $N_v$ zur Verfügung. Ein Funktionsblock 42 kann durch Subtraktion der vorherigen Impulszahl $N_v$ von der aktuellen Impulszahl $N_a$ eine Differenz-Impulszahl $N_d$ ermitteln:

$$N_d = N_a - N_v.$$

Ein Funktionsblock 44 berechnet aus der Differenz-Impulszahl $N_d$ und den im Funktionsblock 38 gespeicherten Werten der Änderungsgeschwindigkeit und der Änderungsbeschleunigung eine Offset-Impulszahl $N_o$, die im Funktionsblock 44 gespeichert wird. Durch Sub-

traktion der Offset-Impulszahl $N_o$ von der aktuellen Impulszahl $N_a$ bildet ein Funktionsblock 46 eine korrigierte Impulszahl $N_k$:

$$N_k = N_a - N_o.$$

Schließlich kann ein Funktionsblock 48 aus der im Meßwertspeicher 40 gespeicherten Impulszahl $N_v$ und den im Funktionsblock 38 gespeicherten Werten der Änderungsgeschwindigkeit und der Änderungsbeschleunigung einen theoretischen Meßwert Nt berechnen.

Die Ausgänge der Funktionsblöcke 46 und 48 sind mit weiteren Schaltkontakten des Umschalters 26 verbunden.

Die zuvor beschriebenen Funktionen werden durch die Steuerschaltung 34 gesteuert. Die hierfür erforderlichen Verbindungen der Steuerschaltung 34 mit den verschiedenen Funktionsblöcken sind in Fig. 2 nicht dargestellt, damit das Blockschema übersichtlich bleibt.

Wie erwähnt, steht der Schalter 26 in der in Fig. 2 dargetellten Stellung, wenn keine Fremdstrahlung vorhanden ist, so daß dann die aktuellen Impulszahlen $N_a$ direkt zu der Meßwertanzeige 22 übertragen werden.

Wenn der Funktionsblock 30 nach einem der zuvor angegebenen Kriterien den Anfang einer Fremdstrahlung erkennt, blockiert die Steuerschaltung 34 den Meßwertspeicher 40, so daß die folgenden Impulszahlen $N_a$ nicht mehr gespeichert werden und im Meßwertspeicher die letzte Impulszahl $N_v$ gespeichert bleibt, die vor dem Auftreten der Fremdstrahlung ermittelt worden ist. Ferner blockiert die Steuerschaltung 34 den Funktionsblock 38, so daß darin die letzten Werte der Änderungsgeschwindigkeit und der Änderungesbeschleunigung gespeichert bleiben, die vor dem Auftreten der Fremdstrahlung ermittelt worden sind.

Weiterhin prüft die Steuerschaltung 34, ob die aktuelle Impulszahl $N_a$ und die vom Funktionsblock 36 ermittelten Werte der Änderungsgeschwindigkeit und der Änderungsbeschleunigung innerhalb vorgegebener Grenzen liegen, um festzustellen, ob die Fremdstrahlung ihren stabilen Zustand erreicht hat. Abhängig vom Ergebnis dieser Prüfung geschieht folgendes:

- Wenn die Impulszahl und/oder die Änderungsgeschwindigkeit und/oder die Änderungsbeschleunigung die vorgegebenen Grenzen überschreiten (wie es insbesondere bei dem zuvor angegebenen Beispiel der Gamma-Graphie während der Überführung der Strahlungsquelle aus dem Strahlenschutzbehälter in den Kollimator der Fall ist), veranlaßt die Steuerschaltung 34 im Funktionsblock 48 die Berechnung von theoretischen Impulszahlen $N_t$ aus der letzten gespeicherten Impulszahl $N_v$ und den gespeicherten Werten der Änderungsgeschwindigkeit und der Änderungsbeschleunigung, wobei sich die berechneten theoretischen Impulszahlen gemäß den gespeicherten Werten der Änderungsgeschwindigkeit und der Änderungsbeschleunigung weiterentwickeln. Zugleich bringt die Steuerschaltung 34 den Umschalter 26 in die Stellung, in der er die Meßwertanzeige 22 mit dem Ausgang des Funktionsblocks 48 verbindet, so daß die berechneten theoretischen Impulzahlen $N_t$ für die Meßwertanzeige verwendet werden.

- Sobald die aktuelle Impulszahl $N_a$, die Änderungsgeschwindigkeit und die Änderungsbeschleunigung alle innerhalb der vorgegebenen Grenzen liegen (wie es bei der Gamma-Graphie dann der Fall ist, wenn die Strahlenquelle in den Kollimator eingefahren ist), veranlaßt die Steuerschaltung 34 im Funktionsblock 42 die Berechnung der Differenz-Impulszahl $N_d$, im Funktionsblock 44 die Berechnung und Speicherung einer Offset-Impulszahl $N_o$ und im Funktionsblock 46 die fortlaufende Berechnung einer korrigierten Impulszahl $N_k$ durch Subtraktion der gespeicherten Offset-Impulszahl $N_o$ von der jeweiligen aktuellen Impulszahl $N_a$. Zugleich bringt die Steuerschaltung 34 den Umschalter 26 in die Stellung, in der die Meßwertanzeige 22 mit dem Ausgang des Funktionsblocks 46 verbunden ist, so daß die korrigierten Impulzahlen $N_k$ für die Meßwertanzeige verwendet werden.

Die Offset-Impulszahl $N_o$ wird im Funktionsblock 46 so berechnet, daß sie der Differenz zwischen der aktuellen Impulszahl $N_a$ und der auf den Zeitpunkt der Berechnung hochgerechneten letzten Impulszahl vor dem Erkennen der Fremdstrahlung entspricht. Der Zeitpunkt der Berechnung unterscheidet sich vom Zeitpunkt des Erkennens der Fremdstrahlung um die benötigte Rechenzeit sowie gegebenfalls um die bis zum Erreichen des stabilen Zustands benötigte Zeit. Wenn die Fremdstrahlung im Zeitpunkt des Erkennens bereits ihren stabilen Zustand hat und die Rechenzeit vernachlässigt werden kann, ist die Offset-Impulszahl $N_o$ gleich der Differenz-Impulszahl $N_d$. Wenn diese Zeiten nicht vernachlässigt werden können, jedoch die Änderungsgeschwindigkeit und die Änderungsbeschleunigung, die im Funktionsblock 38 gespeichert sind, beide Null sind, ist die Offset-Impulszahl $N_o$ ebenfalls gleich der Differenz-Impulszahl $N_d$, weil sich dann die Impulszahl, die ohne Fremdstrahlungseinfluß im Zeitpunkt der Berechnung erhalten würde, gegenüber der letzten gespeicherten Impulszahl $N_v$ nicht verändert hätte. In allen anderen Fällen korrigiert der Funktionsblock 44 die Offset-Impulszahl $N_o$ im Hinblick auf die Änderung, die die gespeicherte Impulszahl $N_v$ infolge der im Funktionsblock 46 gespeicherten Änderungsgeschwindigkeit und Änderungsbeschleunigung bis zum Zeitpunkt der Berechnung erfahren hätte.

Wenn der Funktionsblock 32 das Ende der Fremdstrahlung erkennt, laufen diese Vorgänge in umgekehrter Reihenfolge ab, so daß während des Ausfahrens der Strahlenquelle aus dem Kollimator vorübergehend wie-

der die theoretischen Impulszahlen $N_t$ und nach dem Aufhören der Fremdstrahlung wieder die aktuellen Impulszahlen $N_a$ für die Meßwertanzeige verwendet werden.

Wenn man von den kurzzeitigen Übergangs zuständen beim Ein- und Ausfahren der Fremdstrahlungsquellen absieht, beruht die Funktion der Anordnung 24 auf dem folgenden Prinzip:

- sobald eine erkannte Fremdstrahlung einen stabilen Zustand erreicht hat, wird die Differenz der Meßergebnisse ("Offset") mit und ohne Fremdstrahlung ermittelt;

- während des Vorhandenseins der Fremdstrahlung werden anstelle der aktuellen Meßergebnisse die um die ermittelte Differenz verringerten Meßergebnisse für die Meßwertanzeige verwendet.

Auf diese Weise werden während der Dauer der Fremdstrahlung die Meßergebnisse so angezeigt, als ob die Fremdstrahlung nicht vorhanden wäre.

Die kurzzeitige Einfügung der berechneten theoretischen Meßergebnisse dient nur zur Überbrückung der Übergangzustände, in denen eine Ermittlung des Offset-Werts noch nicht möglich ist. Diese Einfügung von theoretischen Meßwerten entfällt, wenn solche Übergangszustände nicht auftreten. Zur Vereinfachung wäre es auch möglich, während der Übergangs zustände einfach das letzte gültige Meßergebnis anzuzeigen.

Es sind verschiedene Änderungen des beschriebenen Verfahrens möglich. So kann beispielsweise die Bildung und Speicherung der Offset-Impulszahl $N_o$ eingeleitet werden, wenn ab dem Erkennen der Fremdstrahlung eine vorgegebene Zeitdauer abgelaufen ist. Diese Möglichkeit bietet sich insbesondere dann an, wenn das zeitliche Verhalten der Fremdstrahlungsquelle bekannt ist.

Das beschriebene Verfahren ist natürlich nicht auf die Anwendung bei der Füllstandsmessung beschränkt. Andere Anwendungsgebiete sind beispielsweise radioaktive Meßverfahren zur Dichtemessung, Durchflußmessung oder Grenzstanddetektion.

Nach dem heutigen Stand der Technik sind die in Fig. 2 dargestellten Funktionsblöcke in der Regel nicht durch konkrete elektronische Schaltungen gebildet, sondern durch geeignete Programmierung eines Computers realisiert.

**Patentansprüche**

1. Verfahren zur Unterdrückung von sporadisch wirksamen Fremdstrahlungseinflüssen bei radioaktiven Meßverfahren, dadurch gekennzeichnet, daß die Differenz zwischen dem Meßergebnis vor dem Anfang der Fremdstrahlung und dem Meßergebnis nach dem Erreichen eines stabilen Zustands der Fremdstrahlung ermittelt wird und daß während des Bestehens der Fremdstrahlung das Meßergebnis um die ermittelte Differenz verringert wird.

2. Verfahren nach Anspruch 1, dadurch gekennzeichnet, daß bei fehlender Fremdstrahlung das Meßergebnis fortlaufend gespeichert wird und zur Ermittlung der Differenz das letzte vor dem Anfang einer Fremdstrahlung gespeicherte Meßergebnis verwendet wird.

3. Verfahren nach Anspruch 2, dadurch gekennzeichnet, daß die Änderungsgeschwindigkeit und die Änderungsbeschleunigung des Meßergebnisses vor dem Anfang der Fremdstrahlung ermittelt und gespeichert werden und daß das letzte gespeicherte Meßergebnis unter Berücksichtigung der gespeicherten Änderungsgeschwindigkeit und Änderungsbeschleunigung auf den Zeitpunkt der Ermittlung der Differenz hochgerechnet wird.

4. Verfahren nach einem der Ansprüche 1 bis 3, dadurch gekennzeichnet, daß der Beginn der Ermittlung der Differenz von einer Prüfung des Erreichens des stabilen Zustands der Fremdstrahlung abhängig gemacht wird.

5. Verfahren nach Anspruch 4, dadurch gekennzeichnet, daß das Erreichen des stabilen Zustands der Fremdstrahlung durch Prüfung der Änderungsgeschwindigkeit und/oder der Änderungsbeschleunigung des Meßergebnisses festgestellt wird.

6. Verfahren nach einem der Ansprüche 1 bis 3, dadurch gekennzeichnet, daß die Ermittlung der Differenz nach Ablauf einer festgelegten Zeitdauer nach dem Erkennen der Fremdstrahlung eingeleitet wird.

7. Verfahren nach einem der vorhergehenden Ansprüche, dadurch gekennzeichnet, daß zwischen dem Anfang der Fremdstrahlung und dem Erreichen des stabilen Zustands ein theoretischer Meßwert berechnet wird.

8. Verfahren nach einem der vorhergehenden Ansprüche, dadurch gekennzeichnet, daß der Anfang und/oder das Ende der Fremdstrahlung auf Grund von Änderungen des Meßergebnisses erkannt wird.

9. Verfahren nach Anspruch 8, dadurch gekennzeichnet, daß der Anfang und/oder das Ende der Fremdstrahlung durch die Detektierung einer Ortsdosisleistung, die über der maximal möglichen Ortsdosisleistung der Meßstrahlungsquelle liegt, erkannt wird.

10. Verfahren nach Anspruch 8, dadurch gekennzeichnet, daß der Anfang und/oder das Ende der Fremd-strahlung auf Grund einer Änderungsgeschwindig-keit und/oder einer Änderungsbeschleunigung der Ortsdosisleistung, die nicht prozeßbezogen sein kann, erkannt wird.

11. Verfahren nach einem der Ansprüche 1 bis 8, dadurch gekennzeichnet, daß der Anfang und/oder das Ende der Fremdstrahlung mit Hilfe weiterer Strahlungsdetektoren, die nicht der Meßstrahlung ausgesetzt sind, erkannt wird.

**Claims**

1. A method of suppressing sporadically active extraneous radiation effects in radio-active measuring methods, characterised in that the difference between the measured result before the commence-ment of the extraneous radiation and the measured result after the extraneous radiation has attained a stable condition is determined and that for the duration of the extraneous radiation the measured result is decreased by the calculated difference.

2. A method according to claim 1, characterised in that in the absence of extraneous radiation the measured value is continuously stored and the most recently measured value before commencement of the extraneous radiation is used for calculating the difference.

3. A method according to claim 2, characterised in that the rate of change and the acceleration of change in the measured value before commencement of the extraneous radiation are determined and stored and that the most recently measured value is extrapolated to the time of calculating the difference by taking into account the stored rate of change and acceleration of change.

4. A method according to any one of the claims 1 to 3, characterised in that the commencement of the calculation of the difference is made dependent on testing for the attainment of a stable condition in the extraneous radiation.

5. A method according to claim 4, characterised in that the attainment of the stable condition in the extraneous radiation is determined by checking the rate of change and/or the acceleration of change in the measured value.

6. A method according to any one of the claims 1 to 3, characterised in that the determination of the difference is initiated on expiry of a predetermined time interval following on the recognition of the extraneous radiation.

7. A method according to any one of the preceding claims, characterised in that a theoretical measured value is calculated between the commencement of the extraneous radiation and the attainment of the stable condition.

8. A method according to any one of the preceding claims, characterised in that the commencement and/or the termination of the extraneous radiation is recognised through changes in the measured value.

9. A method according to claim 8, characterised in that the commencement and/or termination of the extraneous radiation is recognised by the detection of a local radiation intensity exceeding the maximum possible local radiation intensity of the measuring radiation source.

10. A method according to claim 8, characterised in that the commencement and/or termination of the extraneous radiation is recognised by the rate of change and/or an acceleration of change in the localised radiation intensity, which cannot be process-related.

11. A method according to any one of the claims 1 to 8, characterised in that the commencement and/or termination of the extraneous radiation is recognised by means of further radiation detectors which are not exposed to the measuring radiation.

**Revendications**

1. Procédé de suppression d'influences de rayonnement extérieur se produisant sporadiquement lors de processus de mesure radioactifs, caractérisé en ce que l'on calcule la différence entre le résultat de mesure avant le début du rayonnement extérieur et le résultat de mesure après avoir atteint un état stable du rayonnement extérieur, et en ce que le résultat de mesure, lorsque le rayonnement extérieur persiste, est diminué de la différence calculée.

2. Procédé selon la revendication 1, caractérisé en ce que, en l'absence de rayonnement extérieur, le résultat de mesure est mémorisé en continu, et que, pour calculer la différence, on utilise le dernier résultat de mesure mémorisé avant le début d'un rayonnement extérieur.

3. Procédé selon la revendication 2, caractérisé en ce que la vitesse de modification et l'accélération de modification du résultat de mesure sont calculées et mémorisées avant le début du rayonnement extérieur, et en ce que le dernier résultat de mesure mémorisé est extrapolé au moment du calcul de la différence, en tenant compte de la vitesse de modification et de l'accélération de modification mémorisées.

4. Procédé selon l'une quelconque des revendications 1 à 3, caractérisé en ce que le début du calcul de la différence dépend d'un contrôle de l'obtention de l'état stable du rayonnement extérieur.

5. Procédé selon la revendication 4, caractérisé en ce que l'obtention de l'état stable du rayonnement extérieur est constatée en contrôlant la vitesse de modification et/ou l'accélération de modification du résultat de mesure.

6. Procédé selon l'une quelconque des revendications 1 à 3, caractérisé en ce que le calcul de la différence est introduit après qu'une durée déterminée se soit écoulée après la détection du rayonnement extérieur.

7. Procédé selon l'une quelconque des revendications précédentes, caractérisé en ce que l'on calcule une valeur de mesure théorique entre le début du rayonnement extérieur et l'obtention de l'état stable.

8. Procédé selon l'une quelconque des revendications précédentes, caractérisé en ce que le début et/ou la fin du rayonnement extérieur est identifié en raison de modifications du résultat de mesure.

9. Procédé selon la revendication 8, caractérisé en ce que le début et/ou la fin du rayonnement extérieur est identifié par la détection d'un débit de dose locale, qui est supérieur au débit maximum possible de dose locale de la source du rayonnement de mesure.

10. Procédé selon la revendication 8, caractérisé en ce que le début et/ou la fin du rayonnement extérieur est identifié en raison d'une vitesse de modification et/ou d'une accélération de modification du débit de dose locale qui ne peut pas être spécifique au procédé.

11. Procédé selon l'une quelconque des revendications 1 à 8, caractérisé en ce que le début et/ou la fin du rayonnement extérieur est identifié à l'aide d'autres détecteurs de rayonnement qui ne sont pas exposés au rayonnement de mesure.

**Fig.1**

14

12

10

16

18

20
Auswerteschaltung

$N_a$

24a

24
Unterdrückung von
Fremdstrahlungseinflüssen

24b

22
Meßwertanzeige

EP 0 615 626 B1

Fig. 2

EP 0 615 626 B1